# DEMANDE DE BREVET EUROPEEN

(11) **EP 2 570 973 A1**
(43) Date de publication de la demande: **20.03.2013**
(21) Numéro de dépôt: 11306160.0
(22) Date de dépôt: 16.09.2011
(51) Int. Cl.: G06K 19/077

(54) **Procédé d'établissement d'une communication sans fil et carte à puce associée**

(71) Demandeur: Gemalto SA, 92190 Meudon (FR)
(72) Inventeur: Antoine, Matthieu, 92197 Meudon (FR); Durand, Stéphane, 92197 Meudon (FR)
(74) Mandataire: Cour, Pierre

(57) **Abrégé**

Les modes de réalisation de la présente invention concernent une carte à puce (2) destinée à être installée dans un téléphone mobile et comprenant :
- une première antenne radio-fréquence (3a) configurée pour échanger des signaux radio-fréquences,
- une puce de circuit intégré (7) configurée pour coopérer avec une antenne radio-fréquence (3a) et établir une communication sans fil,
- des moyens de liaison (11) entre ladite première antenne radio-fréquence (3a) et ladite puce de circuit intégré,

caractérisé en ce que ladite carte à puce (2) comprend également :
- au moins une deuxième antenne radio-fréquence (3b) configurée pour échanger des signaux radio-fréquences, la première (3a) et la au moins deuxième (3b) antenne radio-fréquence étant positionnées à des emplacements distincts de la carte à puce (2),
- des moyens de liaison (11) entre ladite deuxième antenne radio-fréquence et ladite puce de circuit intégré,
- la puce de circuit intégré (7) étant également configurée pour sélectionner au moins une parmi la première (3a) et la au moins deuxième (3b) antenne radio-fréquence de la carte à puce (2) pour établir une communication sans fil via 1a, au moins une, antenne radio-fréquence sélectionnée.

## Description

La présente invention concerne le domaine des communications sans fil et plus particulièrement les cartes à puce destinées à être installées dans les téléphones mobiles ou téléphones portables.

A l'heure actuelle, la tendance est de rendre les cartes à puce fournissant les modules d'identité d'abonné les plus indépendantes possibles des téléphones mobiles dans lesquels ces cartes sont installées. Ainsi, dans l'état de la technique, des cartes à puce de type carte universelle de circuit intégré (Universal Integrated Circuit Card (UICC) en anglais) comprenant une antenne intégrée ont été dévoilées afin de permettre une communication radio-fréquence quelque soit le modèle de téléphone mobile dans lequel ces cartes sont installées. Cependant, du fait que la position du blindage électromagnétique du téléphone mobile par rapport à la position de la carte à puce varie d'un modèle de téléphone mobile à l'autre, l'efficacité de la communication sans fil peut être réduite de manière significative avec certains modèles de téléphones mobiles.

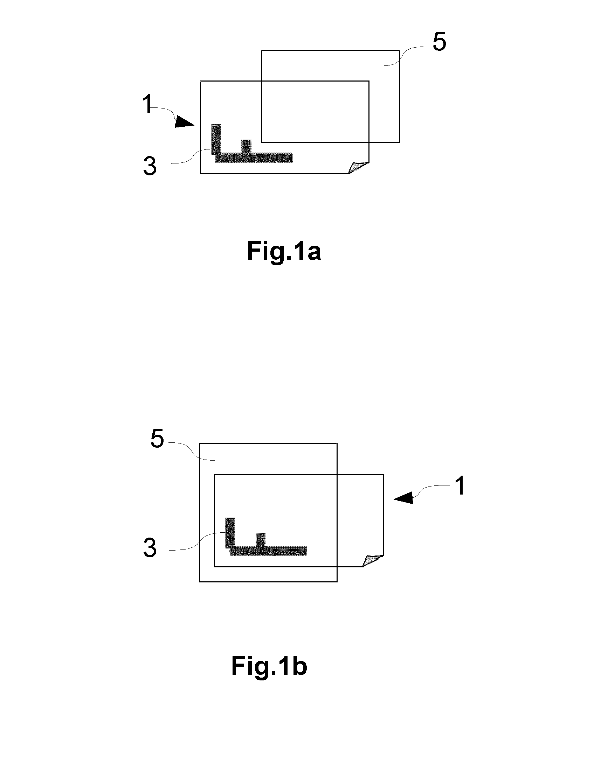

Les figures 1a et 1b représentent les positions respectives d'une carte à puce 1 munie d'une antenne radio-fréquence 3 et d'un blindage électromagnétique 5 d'un téléphone mobile (non représenté) pour respectivement un premier et un deuxième modèle de téléphone mobile.

Dans le cas du premier modèle (figure la) l'antenne 3 de la carte à puce 1 n'est pas superposée avec le blindage électromagnétique 5 de sorte que ce dernier ne détériore pas la communication sans fil établie par l'antenne 3 de la carte à puce 1 tandis que dans le cas du deuxième modèle (figure 1b) l'antenne 3 de la carte à puce 1 est superposée avec le blindage électromagnétique 5 de sorte que ce dernier réduit de manière significative les radiations de l'antenne 3 de la carte à puce 1 ce qui entraîne une détérioration de la communication sans fil établie par l'antenne 3.

Pour surmonter ce problème, une solution consiste à adapter la configuration de la carte à puce à chaque configuration de téléphone portable mais cette solution est très coûteuse puisqu'elle induit une multitude de modèles de cartes à puce différents.

La nécessité est donc de proposer une solution dont le coût est limité et qui permet de limiter l'interaction du blindage électromagnétique d'un téléphone mobile avec une antenne d'une carte à puce pour différentes positions de la carte à puce par rapport au blindage électromagnétique.

Ainsi, la présente invention concerne une carte à puce destinée à être installée dans un téléphone mobile et comprenant :
- une première antenne radio-fréquence configurée pour échanger des signaux radio-fréquences,
- une puce de circuit intégré configurée pour coopérer avec une antenne radio-fréquence et établir une communication sans fil,
- des moyens de liaison entre ladite première antenne radio-fréquence et ladite puce de circuit intégré,
ladite carte à puce comprenant également :
- au moins une deuxième antenne radio-fréquence configurée pour échanger des signaux radio-fréquences, la première et la au moins deuxième antenne radio-fréquence étant positionnées à des emplacements distincts de la carte à puce,
- des moyens de liaison entre ladite deuxième antenne radio-fréquence et ladite puce de circuit intégré,
- la puce de circuit intégré étant également configurée pour sélectionner au moins une parmi la première et la au moins deuxième antenne radio-fréquence de la carte à puce pour établir une communication sans fil via 1a, au moins une, antenne radio-fréquence sélectionnée.

Selon un autre mode de réalisation de la présente invention, la carte à puce comprend également :
- des moyens de commutation associés aux moyens de liaison et configurés pour relier au moins une parmi la première et la au moins deuxième antenne radio-fréquence en fonction d'une commande issue de la puce de circuit intégré,
- la puce de circuit intégré étant également configurée pour transmettre aux moyens de commutation une commande indiquant la au moins une antenne radio-fréquence sélectionnée.

Selon un mode de réalisation additionnel de la présente invention, la puce de circuit intégré est également configurée pour fournir un module universel d'identité d'abonné.

Selon un mode de réalisation supplémentaire de la présente invention, la première et la au moins deuxième antenne radio-fréquence sont situés sur des bords distincts de ladite carte à puce.

Selon un autre mode de réalisation de la présente invention, la première et la au moins deuxième antenne radio-fréquence sont positionnés de sorte qu'au moins deux des antennes ont une orientation générale perpendiculaire l'une par rapport à l'autre.

Selon un mode de réalisation additionnel de la présente invention, la puce de circuit intégré est configurée pour
- recevoir des informations sur la puissance des signaux radio-fréquences émis par les différentes antennes radio-fréquences de la carte à puce lorsque ladite carte à puce est installée dans un téléphone mobile et lorsque le téléphone mobile est placé dans un environnement dédié aux mesures des signaux radio-fréquences et,
- sélectionner la au moins une antenne radio-fréquence émettant le signal de plus grande puissance.

Selon un mode de réalisation supplémentaire de la présente invention, la puce de circuit intégré est configurée pour :
- délivrer à un utilisateur du téléphone mobile une liste prédéfinie de modèles de téléphone mobile susceptibles de recevoir ladite carte à puce,
- recevoir l'information correspondant au modèle sélectionné par l'utilisateur du téléphone mobile,
- déterminer, à partir d'une base de données, la au moins une antenne radio-fréquence fournissant la plus grande puissance de signal pour le modèle de téléphone mobile sélectionné.

Selon un autre mode de réalisation de la présente invention, ladite carte à puce est une carte universelle de circuit intégré.

Selon un mode de réalisation additionnel de la présente invention, le protocole de communication utilisé pour la communication sans fil est un protocole Zigbee.

Selon un mode de réalisation supplémentaire de la présente invention, le protocole de communication utilisé pour la communication sans fil est un protocole Bluetooth.

Selon un autre mode de réalisation de la présente invention, le protocole de communication utilisé pour la communication sans fil est un protocole Wi-Fi.

Selon un mode de réalisation additionnel de la présente invention, le protocole de communication utilisé pour la communication sans fil est un protocole ultra large bande.

Les modes de réalisation de la présente invention concernent également un procédé d'établissement d'une communication sans fil à partir d'une carte à puce destinée à être installée dans un téléphone mobile, ladite carte à puce comprenant :
- une première antenne radio-fréquence configurée pour échanger des signaux radio-fréquences,
- une puce de circuit intégré configurée pour coopérer avec une antenne radio-fréquence et établir une communication sans fil,
- des moyens de liaison entre ladite première antenne radio-fréquence et ladite une puce de circuit intégré,
caractérisé en ce que ladite carte à puce comprend également :
- au moins une deuxième antenne radio-fréquence configurée pour échanger des signaux radio-fréquences, la première et la au moins deuxième antenne radio-fréquence étant positionnées à des emplacements distincts de la carte à puce,
- des moyens de liaison entre ladite deuxième antenne radio-fréquence et ladite puce de circuit intégré,
et en ce que le procédé comprend une étape de sélection d'au moins une parmi la première et la au moins deuxième antenne radio-fréquence de la carte à puce pour établir une communication sans fil via 1a, au moins une, antenne sélectionnée.

Selon un autre mode de réalisation de la présente invention, l'étape de sélection de l'antenne radio-fréquence utilisée pour une communication sans fil comprend les sous-étapes suivantes :
- placer le téléphone mobile, dans lequel est installé la carte à puce, dans un environnement dédié aux mesures radio-fréquences,
- émettre successivement avec chacune des antennes de la carte à puce un signal radio-fréquence,

- mesurer la puissance du signal radio-fréquence émis par chacune des antennes,
- déterminer et sélectionner l'antenne émettant le signal de plus grande puissance.

Selon un mode de réalisation additionnel de la présente invention, l'étape de sélection de l'antenne radio-fréquence utilisée pour une communication sans fil comprend les sous-étapes suivantes :
- délivrer à un utilisateur du téléphone mobile une liste prédéfinie de modèles de téléphone mobile susceptibles de recevoir ladite carte à puce,
- sélectionner, par un utilisateur du téléphone mobile, le modèle du téléphone mobile utilisé dans la liste prédéfinie de téléphones mobiles fournie,
- déterminer et sélectionner, à partir du modèle de téléphone mobile sélectionné et d'une base de données, l'antenne émettant le signal radio-fréquence ayant la puissance la plus grande pour le modèle de téléphone mobile sélectionné.

Selon un mode de réalisation supplémentaire de la présente invention, l'étape de sélection de l'antenne radio-fréquence utilisée pour une communication sans fil est réalisée lors de la première mise en route du téléphone mobile après l'installation de la carte à puce, l'antenne sélectionnée étant alors utilisée pour les communications sans fil jusqu'à un changement de carte à puce ou de téléphone mobile ou d'une reconfiguration de la carte à puce.

D'autres caractéristiques et avantages de l'invention apparaîtront dans la description qui va maintenant en être faite, en référence aux dessins annexés qui en représentent, à titre indicatif mais non limitatif, un mode de réalisation possible.

Sur ces dessins:
- la figure la représente un schéma d'une carte à puce de l'état de la technique et d'un blindage électromagnétique selon une première configuration ;
- la figure 1b représente un schéma d'une carte à puce de l'état de la technique et d'un blindage électromagnétique selon une deuxième configuration ;
- la figure 2 représente un schéma d'une carte à puce selon un mode de réalisation de la présente invention;
- la figure 3 représente un schéma synoptique des différentes étapes d'une sélection d'antenne selon un premier mode de réalisation de la présente invention,
- la figure 4 représente un schéma synoptique des différentes étapes d'une sélection d'antenne selon un deuxième mode de réalisation de la présente invention,
- la figure 5a représente un schéma d'une carte à puce selon un mode de réalisation de la présente invention et d'un blindage électromagnétique selon une première configuration ;
- la figure 5b représente un schéma d'une carte à puce selon un mode de réalisation de la présente invention et d'un blindage électromagnétique selon une deuxième configuration ;

Dans la description qui va suivre, on désigne de façon générale:
- Le terme « USIM » est l'acronyme anglais Universal Subscriber Identification Module et correspond à un module universel d'identité d'abonné;
- Le terme « UICC » est l'acronyme anglais Universal Integrated Circuit Card et correspond à une carte universelle de circuit intégré;
- Le terme « Wi-Fi » est l'abréviation anglaise de wireless fidelity et correspond à un protocole de communication sans fil ;
- Le terme « Zigbee » correspond à un protocole de communication sans fil courte distance ;
- Le terme « Bluetooth » correspond à une spécification de communication sans fil courte distance ;

Les modes de réalisation de la présente invention concernent une carte à puce destinée à être installé dans un téléphone mobile ou téléphone portable et comprenant au moins deux antennes radio-fréquences configurées pour échanger des signaux radio-fréquences, une puce de circuit intégré configurée pour établir une communication sans fil par l'intermédiaire de l'une des antennes radio-fréquences et des moyens de liaison et de commutation permettant de relier les différentes antennes à la puce de circuit intégré.

La carte à puce peut être par exemple une carte universelle de circuit intégré (UICC en anglais).

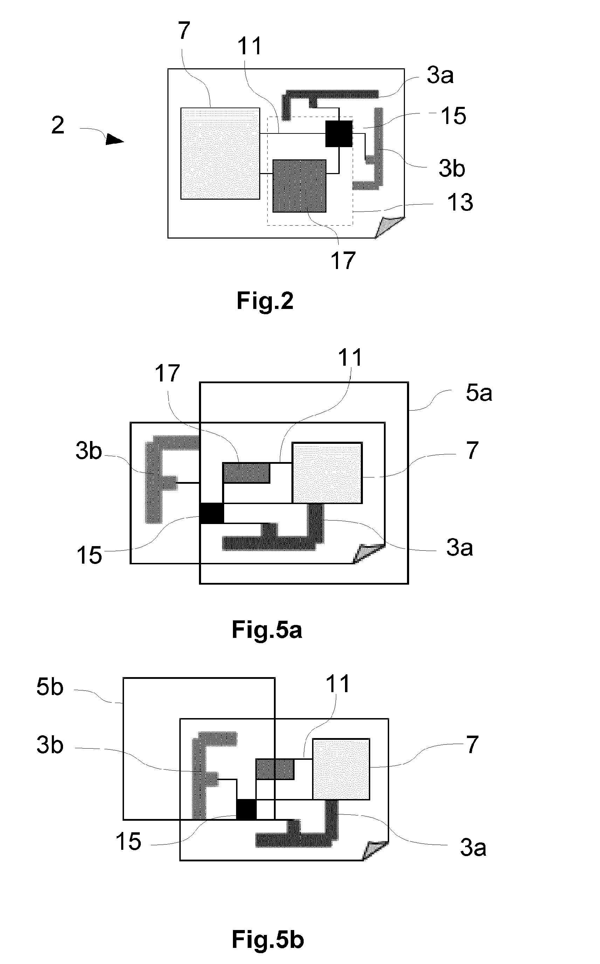

La figure 2 représente un schéma d'une carte à puce 2 selon un mode de réalisation de la présente invention dans le cas où ladite carte à puce 2 comprend deux antennes radio-fréquences notées 3a et 3b. Les deux antennes radio-fréquences 3a et 3b sont reliées à une puce de circuit intégré 7 configurée pour établir une communication sans fil par l'intermédiaire de l'une des antennes radio-fréquences 3a ou 3b. La puce de circuit intégré 7 est également configurée pour fournir un module universel d'identité d'abonné aussi appelé USIM.

Par ailleurs, la carte à puce 2 comprend également des moyens de liaison 11, par exemple des pistes conductrices, et moyens de commutation 13 comprenant un interrupteur radio-fréquence 15 et un module radio-fréquence 17. L'interrupteur radio-fréquence 15 est par exemple un interrupteur à base de d'arséniure de gallium (GaAs) et permet de connecter la puce de circuit intégré 7 à l'une ou l'autre des antennes radio-fréquences 3a et 3b, ledit interrupteur radio-fréquence 15 étant piloté par le module radio-fréquence 17 qui est lui même commandé par la puce de circuit intégré 7.

D'autre part, selon une solution alternative, la puce de circuit intégré 7 comprend une première et une deuxième sorties reliées respectivement à l'antenne 3a et l'antenne 3b de sorte que la commutation vers l'antenne 3a ou l'antenne 3b est réalisée au niveau de la puce de circuit intégré 7.

Par ailleurs, afin qu'au moins une des antennes radio-fréquences 3a, 3b ne soit pas perturbée par un blindage électromagnétique du téléphone mobile dans lequel la carte à puce 2 est installée, les antennes radio-fréquences 3a, 3b sont positionnées à des emplacements distincts de la carte et notamment près des bords. Ainsi, sur la figure 2, les deux antennes 3a et 3b sont positionnées proches de deux bords distincts de la carte à puce 2. Par ailleurs, les deux antennes 3a et 3b sont positionnées perpendiculairement l'une à l'autre afin de maximiser la possibilité que l'une des deux antennes radio-fréquences ne soit pas perturbée par le blindage électromagnétique du téléphone mobile dans lequel la carte à puce 2 est installée.

En pratique, la position des antennes 3a et 3b peut être déterminée par le constructeur de la carte à puce 2 en fonction de la configuration des téléphones mobiles susceptibles d'accueillir la carte à puce 2 et notamment la position du blindage électromagnétique du téléphone mobile par rapport à la position de la carte à puce 2 lorsque ladite carte à puce 2 est installée dans le téléphone mobile.

Concernant la sélection d'une antenne radio-fréquence pour établir une communication sans fil, différents modes de réalisation sont possibles.

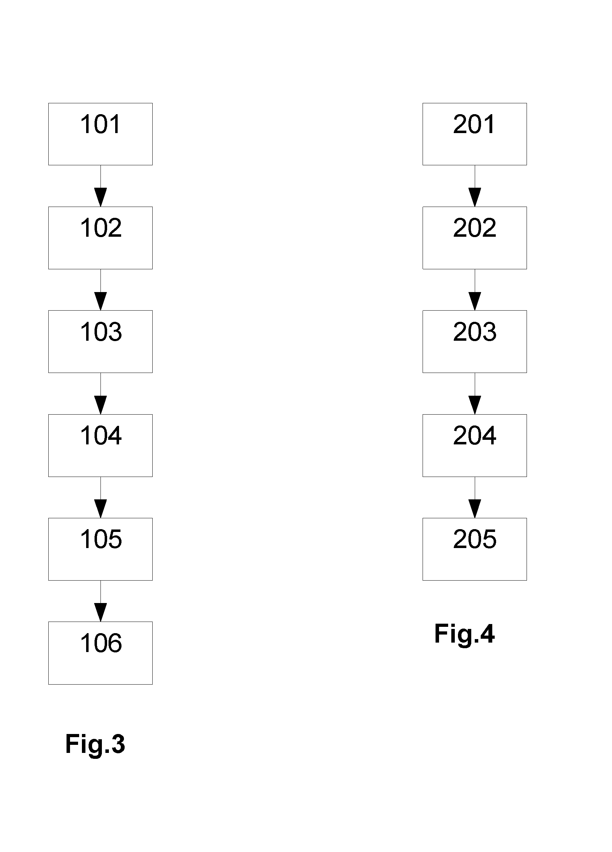

Selon un premier mode de réalisation dont les différentes étapes sont représentées sur la figure 3, la sélection d'une antenne pour établir une communication sans fil comprend une étape préliminaire 101 dans laquelle une base de données est établie par le constructeur de la carte à puce 2 dans laquelle est sauvegardée une liste prédéfinie des modèles de téléphones mobiles susceptibles de recevoir la carte à puce 2 et à chaque modèle de téléphone mobile est associé l'antenne de la carte à puce 2 fournissant le signal radio-fréquence de plus grande puissance. La détermination de l'antenne fournissant le signal radio-fréquence de plus grande puissance étant effectuer préalablement, par exemple par le constructeur de la carte à puce 2.

Cette base de donnée est par exemple sauvegardée dans une mémoire de la carte à puce 2.

Ainsi, lors de la première mise en marche du téléphone mobile après l'installation de la carte à puce 2 dans ledit téléphone mobile, la deuxième étape 102 concerne le lancement par la carte à puce 2 d'une procédure de configuration dans laquelle un message comprenant la liste prédéfinie des modèles susceptibles de recevoir la carte à puce 2 est délivrée à l'utilisateur du téléphone mobile par l'intermédiaire d'un écran d'affichage du téléphone mobile. L'utilisateur choisit alors le modèle correspondant à son téléphone mobile.

Selon un mode de réalisation alternatif, l'information du modèle du téléphone mobile dans lequel la carte à puce 2 est installée est transmise directement à la carte à puce 2 par un équipement prédéterminé, par exemple un module dédié du téléphone portable.

L'étape 103 concerne la réception, par la puce de circuit intégré 7 de l'information correspondant au modèle sélectionné par l'utilisateur du téléphone mobile.

L'étape 104 correspond à la détermination et la sélection, par la puce de circuit intégré 7 de l'antenne radio-fréquence 3a, 3b fournissant la plus grande puissance de signal pour le modèle de téléphone mobile sélectionné à partir de la base de données. L'étape 105 correspond à l'envoi d'une commande par la puce de circuit intégré 7 vers les moyens de commutation 13 indiquant l'antenne sélectionnée lors de l'étape 104 pour établir une communication sans fil. L'étape 106 correspond à la connexion, par les moyens de commutation 13, de l'antenne sélectionnée avec la puce de circuit intégré 7. En pratique, cela revient à régler l'interrupteur radio-fréquence 15 dans une position connectant seulement l'antenne radio-fréquence sélectionné à la puce de circuit intégré 7.

Selon un deuxième mode de réalisation dont les différentes étapes sont représentées sur la figure 4, la sélection d'une antenne radio-fréquence pour établir une communication sans fil comprend une première étape 201 dans laquelle le téléphone mobile dans lequel est installé la carte à puce 2 est mise en marche et est placé dans un environnement dédié aux mesures des signaux radio-fréquences. Un tel environnement peut se situer par exemple au niveau d'un point de vente du téléphone mobile. La deuxième étape 202 consiste à émettre successivement avec chacune des antennes 3a, 3b de la carte à puce 2 un signal radio-fréquence et à mesurer la puissance du signal radio-fréquence émis par chacune des antennes 3a, 3b. Une troisième étape 203 correspond à la réception par la puce de circuit intégré d'un signal comprenant une information indiquant l'antenne émettant le signal de plus grande puissance et la sélection de cette antenne par la puce de circuit intégré 7. La quatrième étape 204 correspond à l'envoi d'une commande par la puce de circuit intégré 7 vers les moyens de commutation 13 indiquant l'antenne sélectionnée lors de l'étape 203 pour établir une communication sans fil. L'étape 205 correspond à la connexion, par les moyens de commutation 13, de l'antenne sélectionnée avec la puce de circuit intégré 2.

De plus, il est à noter que la sélection d'une antenne pour établir une communication sans fil est réalisée une fois lorsque la carte à puce 2 est introduite dans le téléphone mobile et que l'antenne sélectionnée est utilisée ultérieurement pour toutes les communications sans fil jusqu'à un changement de carte à puce 2 ou de téléphone mobile ou d'une reconfiguration de la carte à puce 2.

Par ailleurs, les modes de réalisation de la présente invention s'appliquent à différents protocoles de communication sans fil et notamment les protocoles Zigbee, Bluetooth, Wi-FI ou ultra large bande (ultra wide band (UWB) en anglais).

Afin de mieux comprendre les détails des modes de réalisation, un exemple d'utilisation va maintenant être décrit à partir des figures 5a et 5b.

Une carte à puce 2 similaire à la carte à puce 2 décrite sur la figure 2 est introduite dans un premier téléphone mobile dont la position du blindage électromagnétique 5a par rapport à la position de la carte à puce 2 lorsque cette dernière est installée dans le téléphone mobile est représenté sur la figure 5a. Une fois la carte à puce 2 installée, l'utilisateur allume son téléphone mobile et réalise la sélection d'une antenne radio-fréquence 3a, 3b pour établir une communication sans fil selon l'un des modes de réalisation décrit précédemment à partir des figures 3 et 4. Dans le cas présent, cette sélection conduit à la sélection de l'antenne 3b puisque l'antenne 3a est complètement masquée par le blindage électromagnétique 5a. Ainsi, l'interrupteur radio-fréquence15 est réglé de manière à connecter l'antenne 3b de sorte que l'antenne 3b est alors utilisée pour effectuer les communications sans fil de la carte à puce 2.

Si, ultérieurement, l'utilisateur utilise la carte à puce 2 dans un deuxième téléphone mobile dont la position du blindage électromagnétique 5b par rapport à la position de la carte à puce 2 lorsque cette dernière est installée dans le téléphone mobile est représenté sur la figure 5b. Lors de la mise en marche du deuxième téléphone mobile, une nouvelle sélection d'une antenne pour établir une communication sans fil selon l'un des modes de réalisation décrit précédemment est réalisée. Cette fois-ci, c'est l'antenne 3a qui est sélectionné puisque l'antenne radio-fréquence 3b est complètement masquée par le blindage électromagnétique 5b. Les communications sans fil de la carte à puce 2 se font donc par l'intermédiaire de l'antenne 3a lorsque la carte à puce 2 est installée dans le deuxième téléphone mobile.

Dans la description ci-dessus, le nombre d'antennes radio-fréquences 3a, 3b de la carte à puce 2 est de deux, néanmoins, les modes de réalisation de la présente invention s'étendent également à un nombre plus large d'antennes radio-fréquences et à une répartition des signaux radio-fréquence sur plusieurs antennes radio-fréquences en fonction de la puissance du signal émis par ces antennes. Par exemple si deux antennes fournissent une puissance de signal équivalente et que cette puissance est la plus grande parmi les différentes antennes alors chacune des deux antennes transmet 50% des signaux radio-fréquences d'une communication sans fil de la carte à puce 2.

Ainsi, l'implémentation de plusieurs antennes radio-fréquences 3a, 3b à des emplacements prédéterminés distincts d'une carte à puce 2 et la sélection de l'antenne radio-fréquence produisant le signal radio-fréquence de plus grande puissance pour effectuer les communications radio-fréquences de la carte à puce 2 permet d'obtenir un modèle unique de carte à puce 2 permettant de limiter l'interaction du blindage électromagnétique 5a, 5b du téléphone mobile dans lequel est installée la carte à puce 2 pour différents modèles de téléphones mobiles ayant des positions de blindage électromagnétique 5a, 5b différentes.

## Revendications

1. Carte à puce (2) destinée à être installée dans un téléphone mobile et comprenant :
- une première antenne radio-fréquence (3a) configurée pour échanger des signaux radio-fréquences,
- une puce de circuit intégré (7) configurée pour coopérer avec une antenne radio-fréquence (3a) et établir une communication sans fil,
- des moyens de liaison (11) entre ladite première antenne radio-fréquence (3a) et ladite puce de circuit intégré,
**caractérisé en ce que** ladite carte à puce (2) comprend également :
- au moins une deuxième antenne radio-fréquence (3b) configurée pour échanger des signaux radio-fréquences, la première (3a) et la au moins deuxième (3b) antenne radio-fréquence étant positionnées à des emplacements distincts de la carte à puce (2),
- des moyens de liaison (11) entre ladite deuxième antenne radio-fréquence et ladite puce de circuit intégré,
- la puce de circuit intégré (7) étant également configurée pour sélectionner au moins une parmi la première (3a) et la au moins deuxième (3b) antenne radio-fréquence de la carte à puce (2) pour établir une communication sans fil via 1a, au moins une, antenne radio-fréquence sélectionnée.

2. Carte à puce (2) selon la revendication 1 comprenant également :
- des moyens de commutation (13) associés aux moyens de liaison (11) et configurés pour relier au moins une parmi la première (3a) et la au moins deuxième (3b) antenne radio-fréquence en fonction d'une commande issue de la puce de circuit intégré (7),
- la puce de circuit intégré (7) étant également configurée pour transmettre aux moyens de commutation (13) une commande indiquant la au moins une antenne radio-fréquence sélectionnée.

3. Carte à puce (2) selon la revendication 1 ou 2 dans laquelle la puce de circuit intégré (7) est également configurée pour fournir un module universel d'identité d'abonné.

4. Carte à puce (2) selon l'une des revendications précédentes dans laquelle la première (3a) et la au moins deuxième (3b) antenne radio-fréquence sont situés sur des bords distincts de ladite carte à puce (2).

5. Carte à puce (2) selon la revendication 4 dans laquelle la première (3a) et 1a au moins deuxième (3b) antenne radio-fréquence sont positionnés de sorte qu'au moins deux des antennes (3a, 3b) ont une orientation générale perpendiculaire l'une par rapport à l'autre.

6. Carte à puce (2) selon l'une des revendications précédentes dans laquelle la puce de circuit intégré (7) est configurée pour
- recevoir des informations sur la puissance des signaux radio-fréquences émis par les différentes antennes radio-fréquences (3 a, 3b) de la carte à puce (2) lorsque ladite carte à puce (2) est installée dans un téléphone mobile et lorsque le téléphone mobile est placé dans un environnement dédié aux mesures des signaux radio-fréquences et,
- sélectionner la au moins une antenne radio-fréquence (3a, 3b) émettant le signal de plus grande puissance.

7. Carte à puce (2) selon l'une des revendications 1 à 5 dans lequel la puce de circuit intégré (7) est configurée pour :
- délivrer à un utilisateur du téléphone mobile une liste prédéfinie de modèles de téléphone mobile susceptibles de recevoir ladite carte à puce (2),
- recevoir l'information correspondant au modèle de téléphone mobile sélectionné par l'utilisateur du téléphone mobile,
- déterminer, à partir d'une base de données, la au moins une antenne radio-fréquence (3a, 3b) fournissant la plus grande puissance de signal pour le modèle de téléphone mobile sélectionné.

8. Carte à puce (2) selon l'une des revendications précédentes dans lequel ladite carte à puce (2) est une carte universelle de circuit intégré.

9. Carte à puce (2) selon l'une des revendications précédentes dans lequel le protocole de communication utilisé pour la communication sans fil est un protocole choisi parmi :
Zigbee, Bluetooth, Wi-Fi, Ultra large bande.

10. Procédé d'établissement d'une communication sans fil à partir d'une carte à puce (2) destinée à être installée dans un téléphone mobile, ladite carte à puce (2) comprenant :
- une première antenne radio-fréquence (3a) configurée pour échanger des signaux radio-fréquences,
- une puce de circuit intégré (7) configurée pour coopérer avec une antenne radio-fréquence (3 a) et établir une communication sans fil,
- des moyens de liaison entre ladite première (3a) antenne radio-fréquence et ladite une puce de circuit intégré (7),
**caractérisé en ce que** ladite carte à puce (2) comprend également :
- au moins une deuxième (3b) antenne radio-fréquence configurée pour échanger des signaux radio-fréquences, la première (3a) et la au moins deuxième (3b) antenne radio-fréquence étant positionnées à des emplacements distincts de la carte à puce (2),
- des moyens de liaison (11) entre ladite deuxième (3b) antenne radio-fréquence et ladite puce de circuit intégré (7),
et **en ce que** le procédé comprend une étape de sélection d'au moins une parmi la première (3a) et la au moins deuxième (3b) antenne radio-fréquence de la carte à puce (2) pour établir une communication sans fil via la, au moins une, antenne sélectionnée (3a, 3b).

11. Procédé selon la revendication 10 dans laquelle l'étape de sélection de l'antenne radio-fréquence (3a, 3b) utilisée pour une communication sans fil comprend les sous-étapes suivantes :
- placer le téléphone mobile, dans lequel est installé la carte à puce (2), dans un environnement dédié aux mesures radio-fréquences,
- émettre successivement avec chacune des antennes (3a, 3b) de la carte à puce (2) un signal radio-fréquence,
- mesurer la puissance du signal radio-fréquence émis par chacune des antennes radio-fréquences (3a, 3b),
- déterminer et sélectionner l'antenne radio-fréquence (3a, 3b) émettant le signal de plus grande puissance.

12. Procédé selon l'une des revendications 10 dans laquelle l'étape de sélection de l'antenne radio-fréquence (3a, 3b) utilisée pour une communication sans fil comprend les sous-étapes suivantes :
- délivrer à un utilisateur du téléphone mobile une liste prédéfinie de modèles de téléphone mobile susceptibles de recevoir ladite carte à puce (2),
- sélectionner, par un utilisateur du téléphone mobile, le modèle du téléphone mobile utilisé dans la liste prédéfinie de téléphones mobiles fournie,
- déterminer et sélectionner, à partir du modèle de téléphone mobile sélectionné et d'une base de données, l'antenne radio-fréquence (3a, 3b) émettant le signal radio-fréquence ayant la puissance la plus grande pour le modèle de téléphone mobile sélectionné.

13. Procédé selon l'une des revendications 10 à 12 dans lequel l'étape de sélection de l'antenne radio-fréquence (3a, 3b) utilisée pour une communication sans fil est réalisée lors de la première mise en route du téléphone mobile après l'installation de la carte à puce (2), l'antenne radio-fréquence (3a, 3b) sélectionnée étant alors utilisée pour les communications sans fil jusqu'à un changement de carte à puce (2) ou de téléphone mobile ou d'une reconfiguration de la carte à puce (2).
